# EUROPEAN PATENT APPLICATION

(11) **EP 2 587 628 A1**
(43) Date of publication of application: **01.05.2013**
(21) Application number: 10853549.3
(22) Date of filing: 23.12.2010
(51) Int. Cl.: H02J 17/00

(54) **WIRELESS ELECTRIC POWER RECEIVING DEVICE AND WIRELESS ELECTRIC POWER TRANSMISSION SYSTEM**

(30) Priority: 24.06.2010 CN 201010208327
(71) Applicant: Haier Group Corporation, Qingdao, Shandong 266103 (CN); Qingdao Haier Joint Stock Co., Ltd, Shandong 266103 (CN)
(72) Inventor: BAI, Bing, Qingdao Shandong 266103 (CN); LIU, Chao, Qingdao Shandong 266103 (CN); XU, Yilong, Qingdao Shandong 266103 (CN)
(74) Representative: Ganahl, Bernhard
(86) International application number: PCT/CN2010/080198
(87) International publication number: WO 2011/160411

(57) **Abstract**

A wireless electric power receiving device and a wireless electric power transmission system. The wireless electric power receiving device (106) is coupled to a wireless electric power transmitting device (102). The wireless electric power receiving device comprises a receiving coil (108), a power supply circuit (110) and an alarm unit (114). When the receiving coil is coupled, a coupled voltage is generated and outputted. The power supply circuit comprises a first receiving terminal (118) coupled to the receiving coil, and compares the coupled voltage with a preset operation voltage range to generate and output a control signal when the coupled voltage is beyond the preset operation voltage range. The alarm unit is coupled electrically to the power supply circuit so as to receive the control signal from the power supply circuit and output an alarm signal according to the control signal. The device can prevent a user from misusing a household electrical appliance in case of a deficient voltage.

## Description

### Field of the Invention

The present invention relates to an electric power transmission technology, and in particular, to a wireless electric power receiving device capable of detecting a coupling situation of the wireless electric power transmission, and a wireless electric power transmission system employing the wireless electric power receiving device.

### Background of the Invention

With the progress of electronics technologies, more and more household appliances are used at home. The household appliances typically may be rechargeable or non-rechargeable. Whenever being used for a period of time, the rechargeable household appliance must be connected to a charger for charging, with the power plug of the charger being electrically connected to an external power supply; while the non-rechargeable household appliance is electrically connected to the external power supply directly via a power plug. The non-rechargeable household appliance is required to be arranged near the external power supply, otherwise a user must use an extension wire to connect the non-rechargeable household appliances to the external power supply, and thus the user has to consider the configuration and safety of the extension wire for such a connection.

Therefore, the concept of wireless power supplying is proposed accordingly. However, during the wireless power supplying to the household appliance, the operating voltage of the household appliance are instable due to factors such as an instable external environment and so on, further it is difficult for the user to determine such instable conditions intuitively, and thus the household appliance would be inevitably used by a user that is not aware of its instable operating voltage. Such misuse is disadvantageous to protect the household appliance and may even damage the household appliance.

### Summary of the Invention

The present invention provides a wireless electric power receiving device which can output an alarm signal when a coupling voltage is not within a preset range of operating voltage.

The present invention also provides a wireless electric power transmission system, which can output the alarm signal upon a change of coupling.

In order to achieve above advantages, the present invention proposes a wireless electric power receiving device, which is operably coupled to a wireless electric power transmitting device. The wireless electric power receiving device includes a receiving coil, a power supplying circuit and an alarm unit. The receiving coil generates and outputs a coupling voltage when a coupling is implemented. The power supplying circuit includes a first receiving terminal electrically coupled to the receiving coil, and compares the coupling voltage with a preset range of operating voltage, to generate and output a control signal when the coupling voltage is not within the preset range of operating voltage. The above alarm unit is electrically coupled to the power supplying circuit to receive and output an alarm signal.

In the preferred embodiment of the present invention, the power supplying circuit includes a rectification circuit, an Alternating Current-Direct Current converter, a voltage stabilizing circuit, a comparator and a control circuit that are electrically connected in succession, the rectification circuit is electrically connected to the first receiving terminal which receives the coupling voltage transmitted from the receiving coil, the rectification circuit is adapted to rectify, filter and then transmit the coupling voltage to the Alternating Current-Direct Current converter, the Alternating Current-Direct Current converter converts the received Alternating Current voltage into a Direct Current voltage to be transmitted to the voltage stabilizing circuit, and the comparator compares the Direct Current voltage received from the voltage stabilizing circuit with a built-in preset range of operating voltage and transmits a comparison result to the control circuit.

In the preferred embodiment of the present invention, when the DC voltage converted from the coupling voltage is less than or greater than any voltage value within the preset range of operating voltage, the control circuit generates and outputs a control signal to the alarm unit to control the alarm unit to issue the alarm signal; otherwise, when the DC voltage converted from the coupling voltage is within the preset range of operating voltage, the control circuit utilizes the DC voltage converted from the above coupling voltage as the operating voltage, and outputs the operating voltage to an internal circuit.

In the preferred embodiment of the present invention, the power supplying circuit further includes a second receiving terminal. In addition, the power supplying circuit determines whether an input voltage is present at the second receiving terminal after outputting the alarm signal.

In the preferred embodiment of the present invention, the power supplying circuit stops outputting the operating voltage, when determining that there is no input voltage at the second receiving terminal during a preset period.

In the preferred embodiment of the present invention, when determining that the input voltage is present at the second receiving terminal during the preset period, the power supplying circuit processes and then outputs the input voltage.

In the preferred embodiment of the present invention, the wireless electric power receiving device further includes an internal circuit adapted to receive the processed input voltage.

In the preferred embodiment of the present invention, the input voltage is a utility power supply voltage.

In the preferred embodiment of the present invention, the wireless electric power receiving device further includes an internal circuit. The internal circuit is electrically connected to the power supplying circuit to receive the operating voltage.

In the preferred embodiment of the present invention, the alarm unit includes a micro control unit, a data storage module, a data processing module and an information output module. The micro control unit is electrically connected to the data storage module, the data processing module and the information output module, respectively, and the data processing module is further electrically connected to the data storage module and the information output module, respectively.

The present invention further proposes a wireless electric power transmission system, including a wireless electric power transmitting terminal and a wireless electric power receiving device. The wireless electric power receiving device, which may be coupled to the wireless electric power transmitting device, compares a coupling voltage generated by the coupling with a preset range of operating voltage, and outputs an alarm signal when the coupling voltage is not within the preset range of operating voltage.

By detecting the coupling voltage of the wireless electric power receiving device, the present invention outputs the alarm signal when the coupling voltage is not within the preset range of operating voltage, and allows the user to decide whether to supply power to the wireless electric power receiving device in another manner or to enable the automatic power off of the wireless electric power receiving device, so that the user can determine the current voltage condition intuitively to avoid the situation that the user misuses the household appliances, and thus the household appliances may be protected more effectively.

Above description is only general description of the inventive solutions. Embodiments are described as follows in conjunction with the drawings, in order for better understanding of the technical means of the present invention, carrying out the present invention according to the content of the description, and clearly understanding of the above and other purposes, features and advantages.

### Brief Description of the Drawings

Fig. 1 is a schematic block circuit diagram of a wireless electric power transmission system according to an embodiment of the present invention.
Fig. 2 is a schematic block diagram of a power supplying circuit of the wireless electric power transmission system according to an embodiment of the present invention.
Fig. 3 is a schematic block diagram of an alarm unit of the wireless electric power transmission system according to an embodiment of the present invention.

### Preferred Embodiments of the Present Invention

In order to further describe the technical means adopted by the present invention to achieve the predetermined purpose and effects of the technical means, the specific embodiments, structures, features and effects of the perspective display device proposed according to the present invention are described as follows in detail.

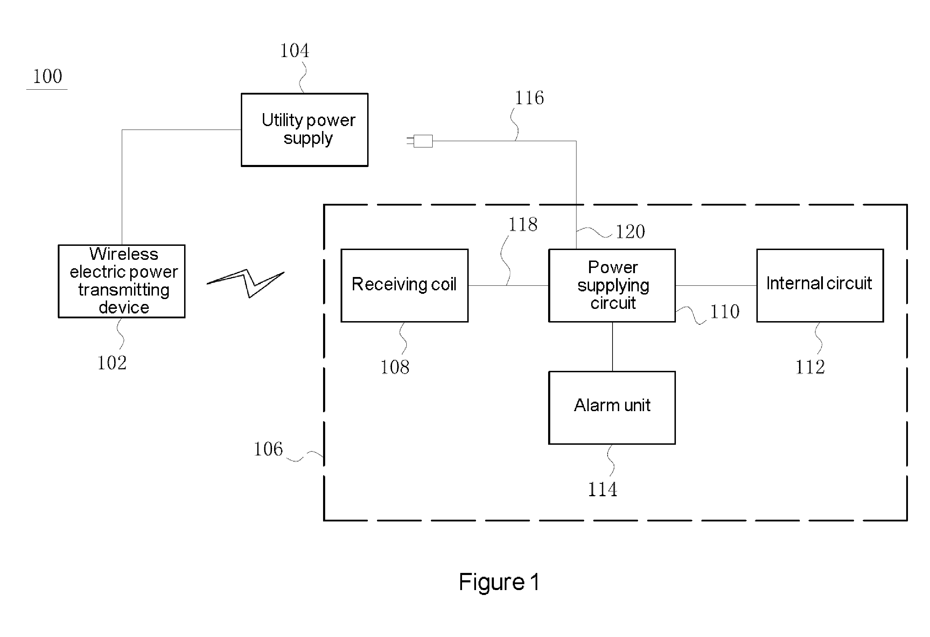

Reference is now made to Fig. 1 which shows the schematic block circuit diagram of the wireless electric power transmission system according to an embodiment of the present invention. In the present embodiment, the wireless electric power transmission system 100 includes a wireless electric power transmitting device 102 and a wireless circuit receiving terminal 106. The wireless electric power transmitting device 102 is electrically coupled to utility power supply 104 to receive the utility power voltage, which is then processed to be coupled to a receiving coil 108 of the wireless circuit receiving terminal 106 via a transmitting coil (not shown), so as to transmit the electric power to the wireless circuit receiving terminal 106.

In the preferred embodiment of the present invention, the wireless circuit receiving terminal 106 can be, for example, a television, but not limited thereto.

The wireless circuit receiving terminal 106 includes the receiving coil 108, a power supplying circuit 110, an internal circuit 112 and an alarm unit 114. The receiving coil 108 is suitable for coupling to the transmitting coil of the wireless electric power transmitting device 102 to generate and output a coupling voltage.

The power supplying circuit 110 includes a first receiving terminal 118 and a second receiving terminal 120, the first receiving terminal 118 of the power supplying circuit 110 is electrically coupled to the receiving coil 108, and the second receiving terminal 120 of the power supplying circuit 110 is electrically coupled to a plug 116, whichs suitable for electrically connecting to the utility power supply 104.

The first receiving terminal 118 of the power supplying circuit 110 is adapted to receive the coupling voltage transmitted from the receiving coil 108, and the coupling voltage is compared with a built-in preset range of operating voltage. When the coupling voltage is not within the built-in preset range of operating voltage, that is, the coupling voltage is less than the minimal voltage within the built-in preset range of operating voltage or greater than the maximal voltage within the built-in preset range of operating voltage, the power supplying circuit 110 generates and transmits a control signal to the alarm unit 114. Otherwise, when the coupling voltage is within the preset range of operating voltage, the power supplying circuit 110 converts the coupling voltage into the operating voltage, and outputs the operating voltage to the internal circuit 112.

In the preferred embodiment of the present invention, the process in which the power supplying circuit 110 converts the coupling voltage to the operating voltage includes, but not limited to, processes such as Alternating Current-Direct Current (AC-DC) voltage conversion, voltage stabilization, and a voltage reduction.

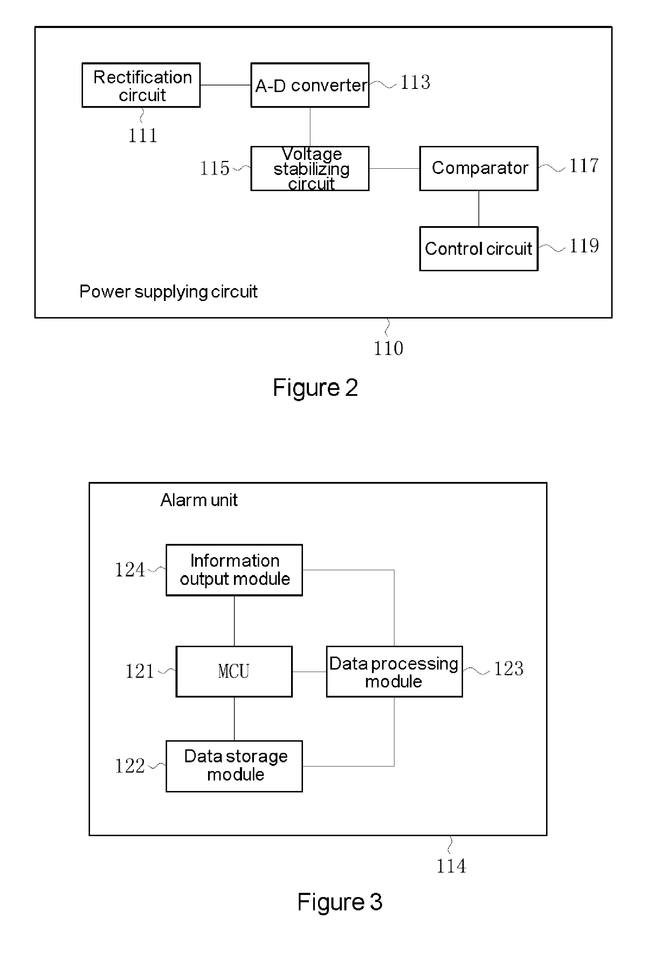

Reference is now made to Fig. 2 which is a schematic block diagram of the power supplying circuit of the wireless electric power transmission system according to an embodiment of the present invention. In the present embodiment, the power supplying circuit 110 includes a rectification circuit 111, an AC-DC converter 113, a voltage stabilizing circuit 115, a comparator 117 and a control circuit 119. The rectification circuit 111, the AC-DC converter 113, the voltage stabilizing circuit 115, the comparator 117 and the control circuit 119 are electrically connected. Here, the rectification circuit 111 is electrically connected to the first receiving terminal 118 of the power supplying circuit 110, the first receiving terminal 118 receives the coupling voltage transmitted from the receiving coil 108, and the rectification circuit 111 rectifies and filters the coupling voltage and transmits the rectified and filtered AC voltage to the AC-DC converter 113. The AC-DC converter 113 converts the received AC voltage to a DC voltage, and transmits the DC voltage to the voltage stabilizing circuit 115. The voltage stabilizing circuit 115 is used to output the DC voltage stably. The comparator 117 receives the DC voltage from the voltage stabilizing circuit 115, compares the DC voltage converted from the coupling voltage with the built-in preset range of operating voltage, and transmits the comparison result to the control circuit 119. When the DC voltage converted from the coupling voltage is less than or greater than any of the voltage within the built-in preset range of operating voltage, the control circuit 119 generates and outputs a control signal to the alarm unit 114, to control the alarm unit 114 to issue an alarm signal. Otherwise, when the DC voltage converted from the coupling voltage is within the built-in preset range of operating voltage, the control circuit 119 utilizes the above DC voltage converted from the coupling voltage as the operating voltage, and outputs the operating voltage to the internal circuit 112.

In the present embodiment, the control circuit 119 of the power supplying circuit 110 starts a timer upon outputting the control signal to the alarm unit 114, and determines whether the second receiving terminal 120 has been supplied with an input voltage in a preset period of time. That is, it is determined whether the user connects the plug 116 to the utility power supply 104 in the preset period of time.

The control circuit 119 of the power supplying circuit 110 stops outputting the operating voltage upon determining that the second receiving terminal 120 has not been supplied with an input voltage in the preset period of time. In other words, because the coupling voltage cannot provide the electric power required for operating the internal circuit 112, and the second receiving terminal 120 of the power supplying circuit 110 has not been supplied with an input voltage, the control circuit 119 of the power supplying circuit 110 stops outputting the operating voltage to the internal circuit 112 to turn off the wireless circuit receiving terminal 106, in order to protect the internal circuit 112.

Once the power supplying circuit 110 determines that the second receiving terminal 120 has been supplied with an input voltage in the preset period of time, the input voltage is used as the electric power source of the wireless circuit receiving terminal 106. In other words, because the coupling voltage cannot provide the electric power required for operating the internal circuit 112, the power supplying circuit 110 performs processes such as the AC-DC voltage conversion, the voltage stabilization, and the voltage reduction on the input voltage, and then outputs the operating voltage for providing the electric power required by the operation of the internal circuit 112.

The alarm unit 114 is electrically coupled to the control circuit 119 of the power supplying circuit 110 to receive the control signal transmitted from the power supplying circuit 110. The alarm unit 114 may issue the alarm via, for example, a light or voice manner. For example, when the power supplying circuit 110 determines that the coupling voltage is not within the preset range of operating voltage, the alarm unit 114 sends out a voice prompt or a text prompt which reads "the voltage is abnormal, please switch the power supplying mode"; and when there is no input voltage at the second receiving terminal 120 of the power supplying circuit 110 during the preset period, the alarm unit 114 sends out a voice prompt or a text prompt which reads "the voltage is abnormal, please power off'.

Reference is now made to Fig. 3 showing a schematic block diagram of the alarm unit of the wireless electric power transmission system according to an embodiment of the present invention. The alarm unit 114 includes a Micro Control Unit (MCU) 121, a data storage module 122, a data processing module 123 and an information output module 124. The MCU 121 is electrically connected to the data storage module 122, the data processing module 123 and the information output module 124, respectively. The data processing module 123 is further electrically connected to the data storage module 122 and the information output module 124, respectively.

The MCU 121 is electrically connected to the control circuit 119 of the power supplying circuit 110, and is adapted to receive the control signal from the control circuit 119, process and then output the control signal to the data processing module 123. The data storage module 122 is electrically connected to the MCU 121 to store the preset alarm message (for example, when the power supplying circuit 110 determines that the coupling voltage is not within the preset range of operating voltage, a voice prompt or a text prompt that reads "voltage is abnormal, please switch the power supplying mode" is sent out; and when there is no input voltage at the second receiving terminal 120 of the power supplying circuit 110, a voice prompt or a text prompt that reads "the voltage is abnormal, please power off" is sent out). The data processing module 123 is connected to the MCU 121, the data storage module 122 and the information output module 124, respectively, and is adapted to receive the control signal output by the MCU 121, and read the matched alarm message in the data storage module 122. The information output module 124 is electrically connected to the MCU 121 and the data processing module 123, respectively, and is adapted to output the alarm message transmitted via the data processing module 123. It can be understood that the information output module 124 may include a voice module, a display module, or both of them, to output the alarm message in a voice form, an image and character form, or both of them.

In the preferred embodiment of the present invention, the input voltage provided by the utility power supply 104 may be an AC voltage, for example, at 220 volts or 110 volts.

In the preferred embodiment of the present invention, the coupling between the wireless electric power transmitting terminal 102 and the wireless circuit receiving terminal 106 is an electromagnetic coupling.

The present invention can detect the coupling voltage of the wireless electric power receiving device such that the alarm signal is output when the coupling voltage is not within the preset range of operating voltage, to enable the user to decide whether to supply electric power to the wireless electric power receiving device in another manner or to enable the automatic power off of the wireless electric power receiving device, as a result, the user can determine the current voltage condition intuitively to avoid the situation that the user misuses the household appliances and protect the household appliances more effectively.

The above description is merely the preferred embodiments of the present invention, and it is not intended to act as any form of limitation for the present invention. Although the present invention has been disclosed with the above preferred embodiment, the embodiment is not intended to limit the present invention. Those skilled in the art can amend and modify the above disclosed technical content as equivalent embodiments with equivalent variation, without departing from the scope of the technical solution of the present invention. However, the contents without departing from the technical solution of the present invention, any of simple amendments, equivalent variations and modifications for the above embodiments based on the technical essence of the present invention, should fall into the scope of the technical solution of the present invention.

### Industrial Applicability of Invention

The present invention enables the detecting of the coupling voltage of the wireless electric power receiving device such that the alarm signal is output when the coupling voltage is not within the preset range of operating voltage, to allow the user to decide whether to supply electric power to the wireless electric power receiving device in another manner or to power off the wireless electric power receiving device automatically, so that the user can determine the current voltage condition intuitively to avoid the situation that the user misuses the household appliances and protect the household appliances more effectively.

## Claims

1. A wireless electric power receiving device, comprising:
a receiving coil coupled to a transmitting coil of a wireless electric power transmitting device;
a power supplying circuit, which comprises a first receiving terminal electrically coupled to the receiving coil, the power supplying circuit being adapted to compare a coupling voltage with a preset range of operating voltage, and generate and output a control signal when the coupling voltage is not within the preset range of operating voltage; and
an alarm unit which is electrically coupled to the power supplying circuit to output an alarm signal according to the control signal.

2. The wireless electric power receiving device of claim 1, wherein, the power supplying circuit comprises a rectification circuit, an Alternating Current-Direct Current converter, a voltage stabilizing circuit, a comparator and a control circuit that are electrically connected in succession, the rectification circuit is electrically connected to the first receiving terminal which receives the coupling voltage transmitted from the receiving coil, the rectification circuit is adapted to rectify, filter and then transmit the coupling voltage to the Alternating Current-Direct Current converter, the Alternating Current-Direct Current converter converts the received Alternating Current voltage into a Direct Current voltage to be transmitted to the voltage stabilizing circuit, and the comparator compares the Direct Current voltage received from the voltage stabilizing circuit with a built-in preset range of operating voltage and transmits a comparison result to the control circuit.

3. The wireless electric power receiving device of claim 2, wherein, when the Direct Current voltage converted from the coupling voltage is not within the preset range of operating voltage, the control circuit generates and outputs a control signal to the alarm unit to control the alarm unit to issue the alarm signal; otherwise, when the Direct Current voltage converted from the coupling voltage is within the preset range of operating voltage, the control circuit utilizes the Direct Current voltage converted from the coupling voltage as the operating voltage, and outputs the operating voltage to an internal circuit as an input voltage of the internal circuit.

4. The wireless electric power receiving device of claim 2, wherein, the power supplying circuit further comprises a second receiving terminal, and determines, upon outputting the alarm signal, whether the second receiving terminal has been supplied with an input voltage.

5. The wireless electric power receiving device of claim 4, wherein, the control circuit of the power supplying circuit stops outputting the operating voltage, when determining that the second receiving terminal has not been supplied with an input voltage in a preset period of time.

6. The wireless electric power receiving device of claim 4, wherein, when determining that the second receiving terminal has been supplied with an input voltage in a preset period of time, the power supplying circuit processes and then outputs the input voltage.

7. The wireless electric power receiving device of claim 3 or 6, wherein, the wireless electric power receiving device further comprises an internal circuit which is electrically connected to the power supplying circuit to receive the processed input voltage.

8. The wireless electric power receiving device of claim 4, wherein, the input voltage is a utility power supply voltage.

9. The wireless electric power receiving device of claim 2, wherein, the alarm unit comprises a micro control unit, a data storage module, a data processing module and an information output module, where the micro control unit is electrically connected to the data storage module, the data processing module and the information output module, respectively, and the data processing module is further electrically connected to the data storage module and the information output module, respectively.

10. The wireless electric power receiving device of claim 9, wherein, the micro control unit is electrically connected to the control circuit of the power supplying circuit, and is adapted to receive the control signal from the control circuit, and process and then output the control signal to the data processing module.

11. The wireless electric power receiving device of claim 10, wherein, the data storage module is electrically connected to the micro control unit and is used to store the preset alarm message.

12. The wireless electric power receiving device of claim 11, wherein, the data processing module is connected to the micro control unit, the data storage module and the information output module, respectively, and is adapted to receive the control signal processed by the micro control unit, and retrieve a matched alarm message from the data storage module.

13. The wireless electric power receiving device of claim 12, wherein, the information output module is connected to the micro control unit and the data processing module, respectively, and is adapted to output the alarm message transmitted from the data processing module, and wherein, the information output module comprises a voice module, a display module or both of them.

14. A wireless electric power transmission system, comprising:
a wireless electric power transmitting device,
a wireless electric power receiving device, which is adapted to be coupled to the wireless electric power transmitting device, compare a coupling voltage generated by the coupling with a preset range of operating voltage, and output an alarm signal when the coupling voltage is not within the preset range of operating voltage.

15. The wireless electric power transmission system of claim 14, wherein, the wireless electric power receiving device comprises:
a receiving coil which generates and outputs the coupling voltage when the coupling occurs ;
a power supplying circuit, which comprises a first receiving terminal electrically coupled to the receiving coil, the power supplying circuit being adapted to compare the coupling voltage with the preset range of operating voltage, and generate and output a control signal when the coupling voltage is not within the preset range of the operating voltage; and
an alarm unit which is electrically coupled to the power supplying circuit to output an alarm signal according to the control signal.

16. The wireless electric power transmission system of claim 15, wherein, the power supplying circuit comprises a rectification circuit, an Alternating Current-Direct Current converter, a voltage stabilizing circuit, a comparator and a control circuit that are electrically connected in succession, the rectification circuit is electrically connected to the first receiving terminal which receives the coupling voltage transmitted from the receiving coil, the rectification circuit is adapted to rectify, filter and then transmit the coupling voltage to the Alternating Current-Direct Current converter, the Alternating Current-Direct Current converter converts the received Alternating Current voltage into a Direct Current voltage to be transmitted to the voltage stabilizing circuit, and the comparator compares the Direct Current voltage received from the voltage stabilizing circuit with a built-in preset range of operating voltage and transmits a comparison result to the control circuit.

17. The wireless electric power transmission system of claim 16, wherein, when the Direct Current voltage converted from the coupling voltage is not within the preset range of operating voltage, the control circuit generates and outputs a control signal to the alarm unit to control the alarm unit to issue the alarm signal; otherwise, when the Direct Current voltage converted from the coupling voltage is within the preset range of operating voltage, the control circuit utilizes the Direct Current voltage converted from the coupling voltage as the operating voltage, and outputs the operating voltage to an internal circuit as an input voltage of the internal circuit.

18. The wireless electric power transmission system of claim 17, wherein, the power supplying circuit further comprises a second receiving terminal, and determines, upon outputting the alarm signal, whether the second receiving terminal has been supplied with an input voltage.

19. The wireless electric power transmission system of claim 18, wherein, the power supplying circuit stops outputting the operating voltage, upon determining that the second receiving terminal has not been supplied with an input voltage in a preset period of time.

20. The wireless electric power transmission system of claim 18, wherein, upon determining that the second receiving terminal has been supplied with an input voltage in a preset period of time, the power supplying circuit processes and then outputs the input voltage.

21. The wireless electric power transmission system of claim 17 or 20, wherein, the wireless electric power receiving device further comprises an internal circuit which is electrically connected to the power supplying circuit to receive the processed input voltage.

22. The wireless electric power transmission system of claim 18, wherein, the input voltage is a utility power supply voltage.

23. The wireless electric power transmission system of claim 16, wherein, the alarm unit comprises a micro control unit, a data storage module, a data processing module and an information output module, where the micro control unit is electrically connected to the data storage module, the data processing module and the information output module, respectively, and the data processing module is further electrically connected to the data storage module and the information output module, respectively.
